# EUROPÄISCHE PATENTSCHRIFT

(11) **EP 2 418 954 B1**
(45) Veröffentlichungstag und Bekanntmachung des Hinweises auf die Patenterteilung: **29.05.2013**
(21) Anmeldenummer: 10713832.3
(22) Anmeldetag: 03.04.2010
(51) Int. Cl.: A01N 51/00, A01N 37/04, A01N 25/12, A01P 7/04

(54) **CO-KRISTALL UMFASSEND IMIDACLOPRID UND VERFAHREN ZU DESSEN HERSTELLUNG**
IMIDACLOPRID CONTAINING CO-CRYSTAL AND METHOD FOR PRODUCING SAME
CO-CRISTAL COMPRENANT DE L'IMIDACLOPRIDE ET SON PROCÉDÉ DE FABRICATION

(30) Priorität: 16.04.2009 EP 09005398
(43) Veröffentlichungstag der Anmeldung: 22.02.2012
(73) Patentinhaber: Bayer Intellectual Property GmbH, 40789 Monheim (DE)
(72) Erfinder: WEISS, Martin, 53332 Bornheim/Sechtem (DE); STORCH, Dirk, 51063 Köln (DE); MEIER, Stephan, Michael, 40227 Düsseldorf (DE); WEISS, Hans-Christoph, 45289 Essen (DE); OLENIK, Britta, 46242 Bottrop (DE); VERMEER, Ronald, 40789 Monheim (DE)
(74) Vertreter: BIP Patents
(86) Internationale Anmeldenummer: PCT/EP2010/002137
(87) Internationale Veröffentlichungsnummer: WO 2010/118833

(56) Entgegenhaltungen:
- WO-A-2007/098270
- WO-A-2008/117060
- T. TALLEY, M. HAREL, R. HIBS, Z. RADIC, M. TOMIZAWA, J. CASIDA, P TAYLOR: "Atomic interactions of neonicotinoids agonists with AChBP: Molecular recognition of the distinctive electronegative pharmacophore." PROCEEDINGS OF THE NATIONAL ACADMEY OF SCIENCES, Bd. 105, Nr. 21, 27. Mai 2008 (2008-05-27) , Seiten 7606-7611, XP002552461
- CHILDS S L ET AL: "The Salt-Cocrystal Continuum: The Influence of Crystal Structure on Ionization State" MOLECULAR PHARMACEUTICS, AMERICAN CHEMICAL SOCIETY, US, Bd. 4, Nr. 3, 1. Januar 2007 (2007-01-01), Seiten 323-338, XP002483371 ISSN: 1543-8384 [gefunden am 2007-04-27]
- STAHLY: "Diversity in Single- and Multiple-Component Crystals. The Search for and Prevalence of Polymorphs and Cocrystals" CRYSTAL GROWTH & DESIGN, ACS, WASHINGTON, DC, US, Bd. 7, Nr. 6, 18. Mai 2007 (2007-05-18), Seiten 1007-1026, XP002483372 ISSN: 1528-7483 [gefunden am 2007-05-18]

## Beschreibung

Die Erfindung betrifft einen neuen Co-Kristall des Insektizides Imidacloprid, sowie ein Verfahren zu seiner Herstellung und seine Verwendung.

Imidacloprid ist ein systemisches Insektizid aus der Gruppe der Neonicotinoide. Es findet seit seiner Entdeckung im Jahr 1985 weltweit Anwendung.

Imidacloprid ist ein systemisches Insektizid, das als Kontakt- wie auch Fraßgift wirken kann. Es wird gut über die Wurzeln aufgenommen und in die Blätter transportiert, die dann vor beißenden und saugenden Insekten geschützt sind. Wird es direkt auf die Blätter ausgebracht, verteilt es sich zwischen Blattober- und Blattunterseite und wird auch zu neugebildeten Blättern hin weitertransportiert. Da Imidacloprid in der Pflanze nur langsam abgebaut wird, hält seine Wirkung längere Zeit an.

Imidacloprid kann darüber hinaus zur Saatgutbeizung bei Zucker- und Futterrüben, Getreide, Kartoffeln, Mais, Zwiebeln und dem Ölkürbis eingesetzt werden. Hier wirkt es beispielsweise gegen Pflanzenläuse, Drahtwürmer, Kartoffelkäfer sowie die Frit-, Zwiebel- und Rübenfliege.

Imidacloprid kann außerdem seit 1996 gegen Tierläuse und Flöhe bei Hunden und Katzen verwendet werden.

Beim Insekt wirkt Imidacloprid wie Acetylcholin am nikotinischen Acetylcholinrezeptor der Nervenzellen, es wird aber nicht durch das Enzym Acetylcholinesterase abgebaut. Durch den ausgelösten Dauerreiz wird die chemische Signalübertragung gestört.

Imidacloprid kann als Reinstoff in zwei Kristallformen vorliegen, wobei die erste Kristallform einen Schmelzpunkt von 136,4°C und die zweite Kristallform einen Schmelzpunkt von 143,8°C aufweist. Es ist mit 0,51 g/l (bei 20°C) nur mäßig wasserlöslich.

Im Allgemeinen können für jeden Feststoff im Wesentlichen amorphe und kristalline Erscheinungsformen, sowie gegebenenfalls Polymorphe, Hydrate und Solvate existieren, die insbesondere die physikalischen Eigenschaften, wie Löslichkeit in verschiedenen Lösungsmitteln, Bioverfügbarkeit bei Aufnahme in einen Organismus, Hygroskopizität und Schmelzpunkt signifikant beeinflussen können. Diese physikalischen Eigenschaften können die Verwendbarkeit des Stoffes in der einen oder anderen Weise einschränken, oder erweitern.

Eine andere Form, die die physikalischen Eigenschaften von kristallinen Substanzen beeinflussen kann, ist das Vorliegen eines sogenannten Co-Kristalls umfassend die kristalline Substanz, deren Eigenschaften beeinflusst werden soll, mit sogenannten Co-Formern. Der somit entstehende Co-Kristall enthaltend mindestens einen Co-Former, sowie die kristalline Substanz zeichnet sich sodann durch andere und gegebenenfalls vorteilhafte physikalische Eigenschaften gegenüber der ursprünglichen kristallinen Substanz in Reinform aus.

In der WO2008/117060 werden Co-Kristalle von den agrochemischen Wirkstoffen Cyprodinil und Pyrimethanil, unter anderem mit Oxalsäure, offenbart.

In der WO 2008/013823 A2 wird ein Verfahren zur Herstellung eines Co-Kristalls umfassend (2R-trans)-6-chloro-5[[4-[(4-fluorophenyl)methyl]-2,5-dimethyl-1-piperazinyl]carbonyl]-N,N, 1-trimethyl-alpha-oxo-1H-indol-3-acetamid, oder dessen Hydrochlorid oder dessen freie Base offenbart.

Die in der WO 2008/013823 A2 offenbarten Co-Former umfassen Arginin, Urea, Salizylsäure, 4-amino-Salicylsäure und Benzoesäure. Es wird offenbart, dass die gefundenen Co-Kristalle eine vorteilhafte Löslichkeit, Lösungsgeschwindigkeit, Bioverfügbarkeit, Stabilität und Weiterverarbeitbarkeit aufweisen. Die offenbarten Co-Kristalle können auch mehr als einen Co-Former enthalten. Das stöchiometrische Verhältnis in dem kristalliner Feststoff und Co-Former zu einander vorliegen können, kann 1:1, 2:1 oder 1:2 betragen.

Das in der WO 2008/013823 A2 offenbarte Verfahren zur Herstellung der Co-Kristalle kann durch Mahlen des kristallinen Feststoffs gemeinsam mit dem mindestens einen Co-Former oder gemeinsames Schmelzen des kristallinen Feststoffs mit dem mindestens einen Co-Former, oder alternativ durch gemeinsames Auflösen von kristallinem Feststoff mit dem mindestens einen Co-Former und nachfolgendes Kristallisieren gekennzeichnet sein. Hierbei können die kristalline Substanz und der mindestens eine Co-Former in einem stöchiometrischen Verhältnis von 1:1 1 bis 1:100 zu einander vorliegen. Das vorgenannte Mahlen des kristallinen Feststoffs gemeinsam mit dem mindestens einen Co-Former kann auch zusammen mit einer geringen Menge an Lösungsmittel durchgeführt werden.

Die in der WO 2008/013823 A2 offenbarten Verfahren zur Charakterisierung des entstandenen Co-Kristalls umfassen Thermogravimetrische Analyse (TGA), Pulver-Röntgenanalytische Messungen (p-XRD) und Differentielle Kalorimetrie (DSC).

Die WO 2008/013823 A2 offenbart keinen Co-Kristall umfassend Imidacloprid. Weiter offenbart die WO 2008/013823 A2 zwar, dass es im Allgemeinen möglich ist, dass sich Co-Kristalle eines kristallinen Feststoffes durch eine Verbesserung der zuvor genannten physikalischen Eigenschaften auszeichnen können, allerdings wird dies im Zusammenhang mit dem offenbarten Co-Kristall nicht offenbart. Es erscheint weiter zweifelhaft, ob die offenbarten Co-Kristalle tatsächlich existent sind. Es werden lediglich Hinweise offenbart, dass die Co-Kristalle existieren könnten. Ein schlussendlicher Beweis, durch die Züchtung eines Einkristalls wird nicht offenbart. Die offenbarten Pulver- Röntgenanalytischen Messungen können durch Beugung und Brechung an den Partikeloberflächen auch Fehlinformationen transportieren.

In der US 2007/0212683 A1 wird ein Co-Kristall von VX-950, einem Hepatitis-C-Virus Inhibitor unter anderem mit Oxalsäure offenbart.

Ähnlich zur Offenbarung der WO 2008/013823 A2 wird auch hier allgemein offenbart, dass die erhaltenen Co-Kristalle vorteilhafte physikalische Eigenschaften haben können. Es wird zwar eine Stabilitätsmessung eine Suspension des Co-Kristalls offenbart, eine vergleichende Offenbarung zwischen dem reinen kristallinen Feststoff und den Co-Kristallen kann jedoch nicht gefunden werden. Darüber hinaus ist auch in der Offenbarung der US 2007/0212683 A1 die Existenz der offenbarten Co-Kristalle gegebenenfalls zu bezweifeln, da auch hier lediglich Pulver-Röntgenanalytische Messungen mit den aus Ihnen resultierenden Fehlerquellen durchgeführt wurden.

In der WO 2008/096005 A1 werden Co-Kristalle von Thiophanat-methyl mit landwirtschaftlichen, organischen Stoffen offenbart. In der Liste der möglichen landwirtschaftlichen, organischen Stoffe, die mit Thiophanat-methyl einen Co-Kristall bilden können wird auch Imidacloprid offenbart (S. 7, Z. 22). Es wird offenbart, dass die landwirtschaftlichen, organischen Stoffe mindestens eine funktionelle Gruppe umfassen müssen, die als Wasserstoffakzeptor einer Wasserstoffbrückenbindung wirken muss. Die Offenbarung bezieht sich insbesondere auf die Wirkung von Thiophanat-methyl als Co-Former zusammen mit anderen landwirtschaftlichen, organischen Stoffen.

Im Gegensatz zu den Offenbarungen der WO 2008/013823 A2 und US 2007/0212683 A1 werden Einkristalle einiger Co-Kristalle nachgewiesen. Eine Offenbarung eines Einkristalls bezüglich eines Co-Kristalls umfassend Imidacloprid wird nicht gegeben. Es wird zugleich offenbart, dass die Bildung solcher Co-Kristalle weder maßgeschneidert, noch vorhergesagt werden kann. Es ist daher davon auszugehen, dass die Offenbarung der WO 2008/096005 A1, wie auch die er WO 2008/013823 A2 und US 2007/0212683 A1 und weiterer Stand der Technik, der nicht das Vorhandensein eines Co-Kristalls von Imidacloprid mittels des Nachweises eines Einkristalls offenbart, einen Co-Kristall von Imidacloprid nicht voroffenbaren.

Ausgehend vom Stand der Technik und den hierin gefundenen Mängeln besteht also die Aufgabe, einen Co-Kristall umfassend Imidacloprid zur Verfügung zu stellen, der positive Veränderungen von relevanten physikalischen Eigenschaften des Imidacloprid hiernach aufweist.

Es wurde nun als erster Gegenstand dieser Erfindung überraschend gefunden, dass ein Co-Kristall umfassend Imidacloprid, **dadurch gekennzeichnet,** dass er als Co-Former Oxalsäure umfasst, diese Aufgabe zu lösen vermag.

Im Zusammenhang mit der vorliegenden Erfindung bezeichnet Co-Kristall einen bei Raumtemperatur (23°C) und Umgebungsdruck (1013 hPa) festen Stoff, der in seinem Kristallgitter mindestens zwei durch Wasserstoffbrückenbindung mit einander in Wechselwirkung stehende Reinsubstanzen enthält, wobei alle im Kristallgitter vorliegenden Reinsubstanzen bei Raumtemperatur (23°C) und Umgebungsdruck (1013 hPa) ebenfalls Feststoffe sind.

Der Begriff Co-Former, wie er im Zusammenhang mit der vorliegenden Erfindung verwendet wird, bezeichnet eine Reinsubstanz, die nicht Imidacloprid ist und die zusammen mit Imidacloprid in mindestens einem stöchiometrischen Verhältnis ein Addukt bildet, das nur einen Schmelzpunkt hat.

Imidacloprid kann im Zusammenhang mit der vorliegenden Erfindung jeder Polymorph, jedes Solvat und auch jedes Hydrat des Stoffs gemäß Formel (I): 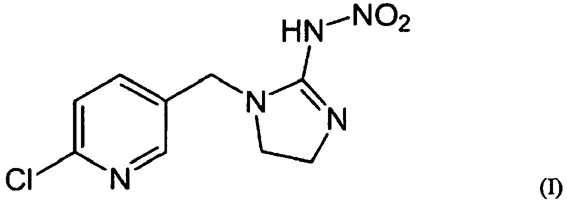 sein.

In bevorzugten Ausführungsformen der vorliegenden Erfindung ist aber Imidacloprid ein Polymorph, oder ein Solvat mit Aceton, Ethylacetat, Ethanol oder 2-Propanol des Stoffs gemäß der Formel (I). Besonders bevorzugt ist Imidacloprid ein Polymorph des Stoffs gemäß der Formel (I) mit einem Schmelzpunkt von etwa 144°C.

Der erfindungsgemäße Co-Kristall hat einen gegenüber der Reinsubstanz Imidacloprid erhöhten Schmelzpunkt.

Als Schmelzpunkt wird im Zusammenhang mit der vorliegenden Erfindung jene Temperatur verstanden, bei der die Substanz bei Messung des Schmelzpunktes in einer differentiellen Kalorimetrie ("Differential Scanning Calorimetry", im Rahmen dieser Erfindung auch kurz: DSC) mit einer Aufheizrate von 5°C pro Minute die höchste Wärmeabgabe aufweist. Das Schmelzen der Substanz setzt bereits früher ein als bei jener Temperatur, bei der die vorgenannte höchste Wärmeabgabe zu messen ist und endet üblicherweise auch bei höheren Temperaturen, weshalb die im Folgenden angegebenen Schmelzpunkte nach anderen Definitionen des Schmelzpunktes durchaus auch bei niedrigeren oder höheren Temperaturen liegen können.

Der erhöhte Schmelzpunkt des erfindungsgemäßen Co-Kristalls ist besonders vorteilhaft, weil somit der Co-Kristall im Gegensatz zum Reinstoff Imidacloprid bei höheren Temperaturen behandelt werden kann, ohne zu schmelzen.

Ein solches Behandeln bei höheren Temperaturen kann ein Trocknen im Zuge des Herstellens des Co-Kristalls sein, oder auch ein Lagern unter erhöhten Temperaturen.

Insbesondere im letzteren Fall neigt der erfindungsgemäße Co-Kristall nicht dazu beim Lagern unter erhöhten Temperaturen an seiner Oberfläche anzuschmelzen und somit zu agglomerieren oder an der Wand des Transportbehälters, in dem er transportiert wird, anzuhaften.

In einer ersten bevorzugten Weiterentwicklung des erfindungsgemäßen Co-Kristalls, besteht der Co-Kristall aus Imidacloprid und Oxalsäure als Co-Former.

Der Co-Kristall gemäß der ersten bevorzugten Weiterentwicklung hat einen Schmelzpunkt, gemessen mittels differentieller Kalorimetrie (DSC) im Bereich von 150°C bis 160°C, bevorzugt im Bereich von 154°C bis 158°C, besonders bevorzugt von etwa 156°C.

Das stöchiometrische Verhältnis von Imidacloprid zu Oxalsäure im Co-Kristall gemäß der ersten bevorzugten Weiterentwicklung beträgt 1:1.

Alle vorgenannten Schmelzpunkte können in allgemein bekannter Art und Weise durch differentielle Kalorimetrie (DSC) ermittelt werden.

Der Co-Kristall ist weiter dadurch gekennzeichnet, dass er eine Trikline Morphologie aufweist.

Hierbei weist der Co-Kristall die Raumgruppe P-1 gemäß Cambridge Strukturdatenbank (F. H., Allen, Acta Cryst.B58, (2002) 380-388) auf.

Die vorgenannten Morphologie und Raumgruppe, wie auch das vorstehend erwähnte stöchiometrische Verhältnis von Imidacloprid zu Oxalsäure können in allgemein bekannter Art und Weise durch Röntgenbeugungsanalyse eines Einkristalls (X-Ray-Diffractometry, im Rahmen dieser Erfindung auch kurz: XRD) des Co-Kristalls ermittelt werden.

Der erfindungsgemäße Co-Kristall weist weiterhin in einer Pulver-Röntgenbeugungsanalyse (Powder-X-Ray-Diffractometry, im Rahmen dieser Erfindung auch kurz: p-XRD) einen Messausschlag bei 2 Θ von 26° bis 27° auf, bevorzugt bei 2 Θ von etwa 26,4° auf, den keiner der beiden Reinstoffe Imidacloprid und/oder Oxalsäure aufweist.

Weiter weist der erfindungsgemäße Co-Kristall in der vorgenannten Pulver-Röntgenbeugungsanalyse (p-XRD) Messausschläge bei 2 Θ von 18° bis 19°, bevorzugt bei 2 Θ von etwa 18,5° und bei 2 Θ von 27° bis 28°, bevorzugt bei 2 Θ von etwa 27,5°.

Von einem Messausschlag wird im Zusammenhang mit der vorliegenden Erfindung gesprochen, wenn der höchste Messwert eines solchen Messausschlags um mindestens den Faktor 2, bevorzugt um mindestens den Faktor 5 von der die Basislinie der Messung abweicht und wenn die unmittelbar benachbarten Messwerte dieses höchsten Messwerts niedrigere Messwerte sind, wobei unmittelbar benachbart einen Winkelbereich von 2 Θ = ± 0,1° bedeutet. Basislinie der Messung ist jene im Wesentlichen horizontale Linie, die durch jene Messwerte approximativ gelegt werden kann, die nicht an einem oder mehreren Messausschlägen beteiligt sind.

Dem Fachmann ist allgemein bekannt, dass die absolute Lage der Basislinie, wie auch die absolute Höhe des höchsten Messwerts eines Messausschlags von der Messdauer abhängen, weshalb nur die relativen Verhältnisse von Basislinie zu Messausschlag und die Lage der Messausschläge maßgeblich sind.

Der Wert für 2 Θ des Messausschlags orientiert sich an der Lage des höchsten Messwerts des Messausschlags, so dass bei einem Messausschlag im Bereich von 2 Θ von 26° bis 27° der höchste Messwert dieses Messausschlags innerhalb dieses Bereich liegt, bzw. bei 2 Θ von etwa 26,4° der höchste Messwert dieses Messausschlags entweder bei exakt 26,4°, oder in einem Bereich von ± 0,2° um diesen Wert liegt.

Ein weiterer Gegenstand der vorliegenden Erfindung ist ein erstes Verfahren zur Herstellung eines Co-Kristalls umfassend Imidacloprid, **dadurch gekennzeichnet,** dass es mindestens die Schritte
a) Vermengen von Imidacloprid mit Oxalsäure unter Erhalt einer Mischung A
b) Gegebenenfalls weiteres Vermengen der Mischung A mit einem Lösungsmittel unter Erhalt einer Mischung A' und
c) Mahlen von Mischung A oder Mischung A' unter Erhalt des erfindungsgemäßen Co-Kristalls
umfasst.

Das Vermengen gemäß Schritt a) des erfindungsgemäßen Verfahrens kann geschehen indem entweder Imidacloprid vorgelegt wird und Oxalsäure zugegeben wird, oder umgekehrt. Bevorzugt wird das Imidacloprid vorgelegt und Oxalsäure unter Wiegen zudosiert.

Die gemäß dem Schritt a) des erfindungsgemäßen Verfahrens erhaltene Mischung A kann Imidacloprid und Oxalsäure in beliebigen stöchiometrischen Verhältnissen enthalten.

Bevorzugt enthält die Mischung A aber Imidacloprid in einem stöchiometrischen Verhältnis von 1:1 1 zu Oxalsäure.

Hieraus ergibt sich auch die bevorzugte Verfahrensweise des Zudosierens der Oxalsäure zu Imidacloprid unter Wiegen. Mit dieser Verfahrensweise kann in besonders exakter Weise das vorgenannte stöchiometrische Verhältnis zu Imidacloprid eingestellt werden, so dass sich der erfindungsgemäße Co-Kristall mit seinen besonders vorteilhaften Eigenschaften bevorzugt bildet.

Das gegebenenfalls auszuführende weitere Vermengen gemäß dem Schritt b) des erfindungsgemäßen Verfahrens wird in einer bevorzugten Ausführungsform des Verfahrens ausgeführt.

Das gemäß Schritt b) des erfindungsgemäßen Verfahrens verwendete Lösungsmittel kann jedes Lösungsmittel sein, das dazu in der Lage ist mindestens einen der Stoffe Oxalsäure oder Imidacloprid in einer Konzentration von mindestens 0,01 g/l zu lösen. Nicht abschließende Beispiele von solchen Lösungsmitteln sind jene ausgewählt aus der Liste enthaltend Aceton, Ethylacetat, Ethanol und 2-Propanol.

Im Schritt b) des erfindungsgemäßen Verfahrens wird das Lösungsmittel in einer Menge zugegeben, so dass in der resultierenden Mischung A' die Löslichkeitskonzentration von Imidacloprid oder Oxalsäure überschritten wird. Bevorzugt wird die Löslichkeitskonzentration von Imidacloprid und Oxalsäure überschritten.

Eine solche Verfahrensweise ist besonders vorteilhaft, weil hierdurch die Feststoffe im Wesentlichen weiter als Feststoffe vorliegen und lediglich die Oberflächen der Feststoffe mit dem Lösungsmittel benetzt sind. Hierdurch wird der molekulare Kontakt zwischen dem Imidacloprid und Oxalsäure, verbessert, ohne dass die Wahrscheinlichkeit der Bildung von Solvaten und/oder Hydraten überproportional erhöht wird. Weiter kann hierdurch die Anwesenheit des Lösungsmittels nicht der molekularen Adduktbildung im Sinne einer Wasserstoffbrückenbindung zwischen Imidacloprid und Oxalsäure signifikant entgegenstehen.

Das Mahlen der Mischung A oder Mischung A' kann in allen dem Fachmann allgemein bekannten zum Mahlen von Feststoffen geeigneten Vorrichtungen erfolgen.

Nicht abschließende Beispiele für Vorrichtungen in denen ein solches Mahlen ausgeführt werden kann sind etwa Mörsermühlen, Schwingmühlen oder Kugelmühlen. Bevorzugt wird das erfindungsgemäße Verfahren in Schwingmühlen oder Kugelmühlen ausgeführt.

Bei solchen Mahlverfahren muss die in das zu mahlende Material eingetragene Energie so bemessen werden, dass es nicht zu einer ungewollten Ausbildung von amorphen Phasen der Feststoffe kommt, zugleich aber ein intensives in Kontaktbringen der Feststoffe in der Mahlvorrichtung stattfindet. Somit gibt es einen nach oben und unten begrenzten Bereich solcher Energien, wie sie mittels der Mahlvorrichtung in die Feststoffe eingebracht werden kann.

Der Fachmann kennt geeignete Parameter mit denen er diese Energie einstellen kann. Hierzu gehören etwa die Dauer und Intensität (z.B. Anpressdruck einer Mörsermühle oder Größe und Material, sowie Amplitude und Frequenz bei einer Schwingmühle oder Drehgeschwindigkeit bei einer Kugelmühle) des Mahlens.

Solche Verfahrensweisen sind besonders vorteilhaft, weil durch die Begrenzung der eingetragenen Energie sichergestellt werden kann, dass hinsichtlich des Mindestmaßes an Energie ein intensiver Kontakt von Imidacloprid mit Oxalsäure erfolgt, während zugleich durch die Begrenzung nach oben ein zu intensives Beanspruchen der Stoffe vermieden wird. Ein solches zu intensives Beanspruchen der Stoffe, die gemahlen werden, kann dazu führen, dass diese in einen amorphen Zustand überführt werden, was die Bildung eines Co-Kristalls evtl. verhindert, bzw. einen gebildeten Co-Kristall zerstören kann.

Das gesamte Verfahren wird üblicherweise bei Raumtemperatur (23°) und Umgebungsdruck (1013 hPa) ausgeführt. Es kann jedoch zweckmäßig sein, das Verfahren und insbesondere den Schritt c) bei niedrigeren Temperaturen auszuführen, um eine gewisse Erwärmung der zu mahlenden Stoffe tolerieren zu können, ohne dass der Energieeintrag in vorgenannter Überführung in den amorphen Zustand resultiert.

Ein weiterer Gegenstand der vorliegenden Erfindung ist ein auch ein zweites Verfahren zur Herstellung eines Co-Kristalls umfassend Imidacloprid, **dadurch gekennzeichnet,** dass es mindestens die Schritte
a) Bereitstellen einer gesättigten Lösung (A) von Imidacloprid und/oder einer gesättigten Lösung (B) von Oxalsäure.
b) Vermengen von Lösungen A und B und/oder oder Hinzugeben von Oxalsäure als Feststoff zu der Lösung A und/oder Hinzugeben von Imidacloprid als Feststoff zu der Lösung B
umfasst.

Gemäß dem vorstehenden zweiten erfindungsgemäßen Verfahren kann die Lösung A mit einem ersten Lösungsmittel hergestellt und die Lösung B mit einem zweiten Lösungsmittel hergestellt werden.

Das erste und das zweite Lösungsmittel können unabhängig von einander Lösungsmittel sein, die dazu in der Lage sind mindestens einen der Stoffe Oxalsäure und/oder Imidacloprid in einer Konzentration von mindestens 0,01 g/l zu lösen. Nicht abschließende Beispiele von solchen Lösungsmitteln sind jene ausgewählt aus der Liste bestehend aus Aceton, Ethylacetat, Ethanol und 2-Propanol.

In bevorzugten Ausführungsformen sind das erste und das zweite Lösungsmittel das gleiche.

Gemäß dem Schritt a) des zweiten erfindungsgemäßen Verfahrens kann auch nur eine Lösung A oder eine Lösung B vorliegen. Wenn nur eine Lösung A oder eine Lösung B gemäß dem Schritt a) des Verfahrens bereitgestellt wird, so wird gemäß dem Schritt b) des Verfahrens entweder zu der Lösung A Oxalsäure als Feststoff hinzugegeben oder zu der Lösung B Imidacloprid als Feststoff hinzu gegeben.

Es ist in alternativen Ausführungsformen des zweiten erfindungsgemäßen Verfahrens auch möglich eine Lösung A und eine Lösung B gemäß dem Schritt a) bereit zu stellen und diese gemäß dem Schritt b) des Verfahrens zu vermengen, während man zu den sich vermengenden Lösungen A und B auch noch Oxalsäure als Feststoff und/oder Imidacloprid als Feststoff hinzu gibt.

Bevorzugt wird das zweite erfindungsgemäße Verfahren aber so ausgeführt, dass im Schritt a) die Lösungen A und B bereitgestellt werden und diese Lösungen ohne Hinzugabe von weiterem Feststoff mit einander vermengt werden.

Ein weiterer Gegenstand der vorliegenden Erfindung ist die Verwendung von Co-Kristallen von Imidacloprid mit Oxalsäure als Co-Former für die Herstellung einer Lösung zur Bekämpfung von Insekten.

Wie bereits zuvor im Zusammenhang mit den erfindungsgemäßen Co-Kristallen ausgeführt, ist eine solche Verwendung besonders vorteilhaft, weil sich somit besonders hoch konzentrierte Lösungen herstellen lassen, die versprüht werden können, da Co-Kristalle üblicherweise eine bessere Löslichkeit aufweisen, als die jeweiligen Reinstoffe.

Die Erfindung wird nachfolgend anhand von Beispielen und Abbildungen näher erläutert, ohne sie jedoch hierdurch darauf zu beschränken.
Fig. 1 zeigt eine Pulver-Röntgenbeugungsanalyse eines Pulvers enthaltend Imidacloprid und Oxalsäure in einem stöchiometrischen Verhältnis von 1:1, erhalten aus Beispiel 1.
Fig. 2 zeigt eine Pulver-Röntgenbeugungsanalyse eines Pulvers enthaltend Imidacloprid und Oxalsäure in einem stöchiometrischen Verhältnis von 1:1, erhalten aus Beispiel 2.
Fig. 3 zeigt einen Vergleich der der Pulver-Röntgenbeugungsanalysen von Imidacloprid (A), Oxalsäure (B) und einem erfindungsgemäßen Co-Kristall (C) aus Beispiel 2. In dieser Fig. 3 ergibt sich eine horizontale Basislinie mit y ∼ 30 a.u.
Fig. 4 zeigt Messdaten einer differentielle Kalorimetrie (DSC) gemäß dem Beispiel 5, aufgetragen als bei einer Temperatur (T) aufgenommene Wärmeleistung (P) eines reinen Pulvers von Imidacloprid (A), eines Pulvers aus Beispiel 1 (B) und eines Pulvers von Oxalsäure (C).

### Beispiele:

### Beispiel 1: Herstellen eine Co-Kristall-Pulvers

164 mg eines Pulvers von Imidacloprid (Fa. Bayer CropScience AG) wurden mit 59 mg eines Pulvers von Oxalsäure in einem 2 ml Reaktionsgefäß (Fa. Eppendorf) vermischt. Der Pulvermischung wurden 30 µl flüssiges Ethylacetat zugegeben. Der somit erhaltene Inhalt des vorgenannte Reaktionsgefäßes wurde zusammen mit 7 Edelstahlkugeln eines Durchmessers von 3 mm in eine Retsch MM200 Schwingmühle überführt und in dieser für 60 Minuten bei 30 Hz gemahlen.

Das gemahlene Gut wurde über Nacht bei Raumtemperatur (23°C) und Umgebungsdruck (1013 hPa) getrocknet, um das Ethylacetat zu verdunsten. Es wurde ein Pulver erhalten, das den Untersuchungen in Beispiel 4 und 5 zugeführt wurde.

### Beispiel 2: Herstellen eines Co-Kristall Pulvers

161 mg eines Pulvers von Imidacloprid (Fa. Bayer CropScience AG) wurden mit 58 mg eines Pulvers von Oxalsäure in einem 2 ml Reaktionsgefäß (Fa. Eppendorf) vermischt. Der Pulvermischung wurden 30 µl flüssiges Aceton zugegeben. Der somit erhaltene Inhalt des vorgenannte Reaktionsgefäßes wurde zusammen mit 7 Edelstahlkugeln eines Durchmessers von 3 mm in eine Retsch MM200 Schwingmühle überführt und in dieser für 60 Minuten bei 30 Hz gemahlen.

Das gemahlene Gut wurde über Nacht bei Raumtemperatur (23°C) und Umgebungsdruck (1013 hPa) getrocknet, um das Aceton zu verdunsten. Es wurde ein Pulver erhalten, das den Untersuchungen in Beispiel 4 und 5 zugeführt wurde.

### Beispiel 3: Herstellen eines Einkristalls des Co-Kristall

2 ml einer gesättigten Imidacloprid-Lösung in Aceton wurden mit 2 ml gesättigter Oxalsäure-Lösung in Aceton versetzt und durch schütteln vermischt. Über Nacht bildeten sich bei Raumtemperatur (23°C) und unter Umgebungsdruck (1013 hPa) Kristalle von ca. 1 mm Größe. Einzelne Kristalle wurden entnommen und der Untersuchung gemäß dem Beispiel 6 zugeführt.

### Beispiel 4: Pulver-Röntgenbeugungsanalytische Messung (p-XRD) der Pulver gemäß Beispiel 1 und Beispiel 2

Das aus den Beispielen 1 und 2 erhaltene Pulver wurden mittels eines Röntgendiffraktometer (Fa. Stoe, Typ. STADI-P Transmissionsdiffraktometer, Primärmonochromator: Ge[1 1 1], Strahlungsquelle; Cu_{kα1}, Wellenlänge 1.54 Å, Detektor: Linearer PSD, Temperatur (Messung): 100 K) untersucht.

Weiter wurden in analoger Weise Reinstoffpulver von Imidacloprid und Oxalsäure vermessen.

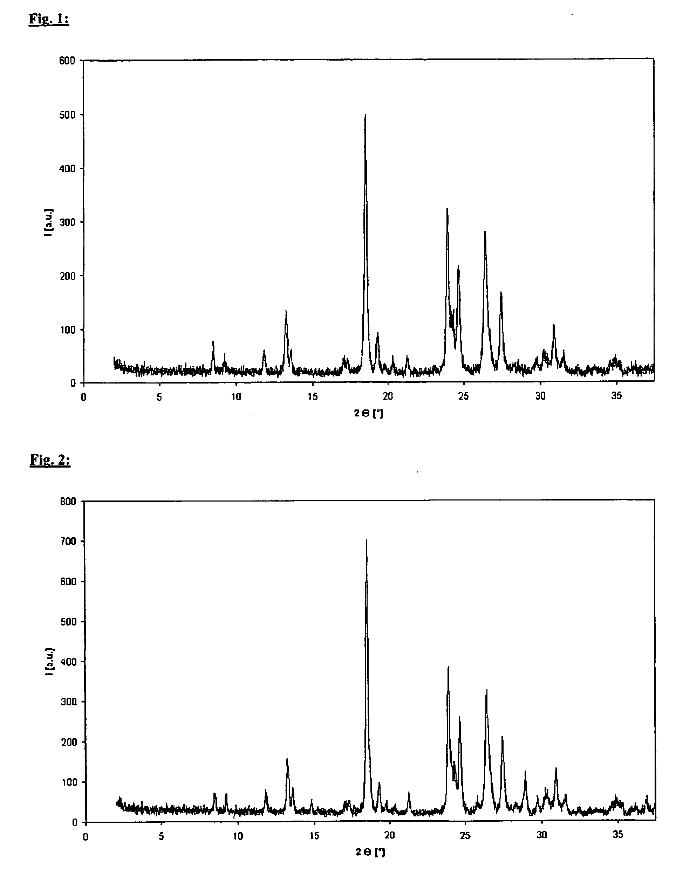

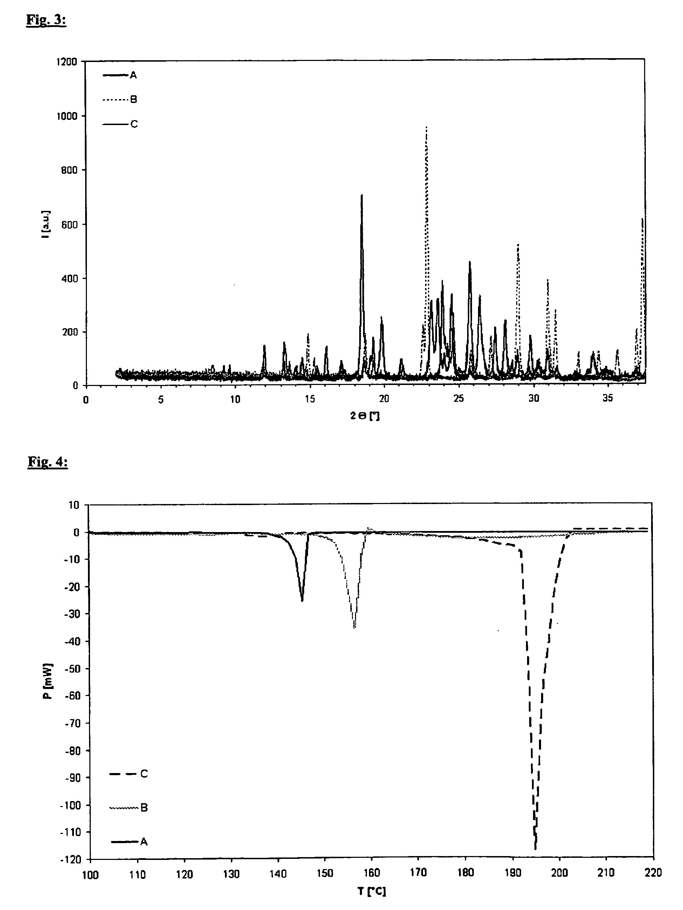

Die Untersuchung des Pulvers aus dem Beispiel 1 ergab das in Fig. 1 dargestellte charakteristische Pulver-Röntgendiffraktogramm. Die Untersuchung des Pulvers aus dem Beispiel 2 ergab das in Fig. 2 dargestellte charakteristische Pulver-Röntgendiffraktogramm. Der Vergleich der Messungen des Pulvers aus Beispiel 1 (C) mit den Messungen der Reinstoffpulver von Imidacloprid (A) und Oxalsäure (B) sind in Fig. 3 dargestellt.

Man erkennt, dass die Fig. 1 und Fig. 2 Messergebnisse des gleichen Stoffes sind.

Weiter erkennt man in dem in Fig. 3 dargestellten Vergleich der Messergebnisse, dass insbesondere im Bereich 2 Θ von 26° bis 27° der erfindungsgemäße Co-Kristall einen Messausschlag bei 2 Θ von etwa 26,4° aufweist, der für keine der beiden Reinsubstanzen gefunden wird. Weiter sind Messausschläge bei 2 Θ von etwa 18,5° und bei 2 Θ von etwa 27,5° erkennbar.

Es kann somit auch eindeutig erkannt werden, dass es sich um einen anderen Stoff und nicht um eine physikalische Mischung von Imidacloprid und Oxalsäure handelt.

### Beispiel 5: Differentielle Kalorimetrie (DSC) der Pulver gemäß Beispiel 1

Das aus dem Beispiel 1 erhaltene Pulver, sowie reines Pulver von Imidacloprid und Oxalsäure werden in einem Differentiellen Kalorimeter (Fa. Mettler-Toledo, Typ: DSC 822, Starttemperatur 100°C, Heizrate 5°C/min; Endtemperatur: 220°C) untersucht

Die Ergebnisse der Messungen sind in der Fig. 4 dargestellt. Man erkennt für jedes der untersuchten Pulver nur jeweils einen Schmelzpunkt, was im Fall des Pulvers von Imidacloprid (A) der Schmelzpunkt von etwa 144°C der Reinsubstanz (zweite Kristallmodifikation) ist, im Fall von Oxalsäure (C) der Schmelzpunkt von etwa 195°C der Reinsubstanz ist und der in bei dem Pulver aus dem Beispiel 1 durch die Bildung der erfindungsgemäßen Co-Kristalls (B) verändert ist und etwa 156°C beträgt. Die Feststellung, dass jeweils nur ein Schmelzpunkt ermittelt wurde zeigt, dass es sich bei den Pulvern nicht um Gemische von Stoffen handelt.

Somit wird durch die Bildung der erfindungsgemäßen Co-Kristalls der Schmelzpunkt gegenüber reinem Imidacloprid erhöht.

### Beispiel 6: Röntgenbeugungsanalyse (XRD) des Einkristalls gemäß Beispiel 3

Ein farbloser Kristall der ungefähren Abmaße 0,60 x 0,40 x 0,40mm³ aus Beispiel 3 wurde in einem Röntgendiffraktometer (Fa. Oxford Diffraction, Typ: Xcalibur) ausgerüstet mit einem CCD Flächendetektor (Model: Ruby), einer Cu_{Kα} Strahlungsquelle und einer Cryojet Niedrigtemperaturvorrichtung (T =100 K) untersucht. Die Messdaten wurden in alle Raumrichtungen aufgenommen, d.h. es wurde der Detektor um einen horizontalen und eine vertikalen Winkel vollständig um die Probe bewegt.

Die Messdaten wurden mittels der Software Crysalis (Fa. Oxford Diffraction 2007) gesammelt und protokolliert. Die Lösung der Kristallstrukturgleichungen wurde mittels direkter Methoden ausgeführt, wie sie in dem verwendeten Programm SHELXTL Version 6.10 (Sheldrick, Universität Göttingen, Germany, 2000) implementiert sind. Hiernach wurden die Daten visualisiert, wonach ein stöchiometrisches Verhältnis von Imidacloprid zu Oxalsäure von 1:1 1 erkannt werden kann.

Eine Übersicht über die wesentlichen Versuchs und Messdaten wird in der Tabelle 1 gegeben.

| **Parameter** | **Wert** | |
|---|---|---|
| Temperatur (Messung) | 100 K | |
| Wellenlänge (Messung) | 1,54178 Å | |
| Morphologie | Triklin | |
| Raumgruppe | P-1 | |
| Dimension der Einheitszelle | a = 7.1564(4) Å | α= 89.977(3)° |
| | b = 10.1184(3) Å | β= 74.618(4)° |
| | c = 10.6975(5) Å | γ = 71.179(4)° |
| Volumen der Einheitszelle | 703.85(6) Å³ | |
| Dichte (berechnet) | 1,631 Mg/m3 | |
| Absorptionskoeffizient | 2.820 mm⁻¹ | |

## Patentansprüche

1. Co-Kristall umfassend Imidacloprid, **dadurch gekennzeichnet, dass** er als Co-Former Oxalsäure umfasst.

2. Co-Kristall gemäß Anspruch 1, **dadurch gekennzeichnet, dass** er aus Imidacloprid und Oxalsäure besteht.

3. Co-Kristall gemäß einem der Ansprüche 1 oder 2, **dadurch gekennzeichnet, dass** das stöchiometrische Verhältnis von Imidacloprid zu Oxalsäure 1:1 beträgt.

4. Co-Kristall gemäß einem der Ansprüche 2 bis 3, **dadurch gekennzeichnet, dass** er eine Trikline Morphologie aufweist.

5. Co-Kristall gemäß einem der vorstehenden Ansprüche, **dadurch gekennzeichnet, dass** er einen Schmelzpunkt, gemessen mittels Differentieller Kalorimetrie (DSC) im Bereich von 150°C bis 160°C aufweist.

6. Co-Kristall gemäß einem der vorstehenden Ansprüche, **dadurch gekennzeichnet, dass** er in Pulver-Röntgenbeugungsanalyse (p-XRD) einen Messausschlag bei 2 Θ von 26° bis 27° aufweist, den keiner der beiden Reinstoffe Imidacloprid und/oder Oxalsäure aufweist.

7. Co-Kristall gemäß einem der vorstehenden Ansprüche, **dadurch gekennzeichnet, dass** er in Pulver-Röntgenbeugungsanalyse (p-XRD) Messausschläge bei 2 Θ von 18° bis 19° und bei 2 Θ von 27° bis 28° aufweist.

8. Verfahren zur Herstellung eines Co-Kristalls umfassend Imidacloprid, **dadurch gekennzeichnet, dass** es mindestens die Schritte
a) Vermengen von Imidacloprid mit Oxalsäure unter Erhalt einer Mischung A
b) Gegebenenfalls weiteres Vermengen der Mischung A mit einem Lösungsmittel unter Erhalt einer Mischung A' und
c) Mahlen von Mischung A oder Mischung A' unter Erhalt des erfindungsgemäßen Co-Kristalls
umfasst.

9. Verfahren zur Herstellung eines Co-Kristalls umfassend Imidacloprid, **dadurch gekennzeichnet, dass** es mindestens die Schritte
a) Bereitstellen einer gesättigten Lösung (A) von Imidacloprid und/oder einer gesättigten Lösung (B) von Oxalsäure.
b) Vermengen von Lösungen A und B und/oder oder Hinzugeben von Oxalsäure als Feststoff zu der Lösung A und/oder Hinzugeben von Imidacloprid als Feststoff zu der Lösung B
umfasst

10. Verwendung von Co-Kristallen gemäß einem der Ansprüche 1 bis 7 für die Herstellung einer Lösung zur Bekämpfung von Insekten.

## Claims

1. Cocrystal comprising imidacloprid, **characterized in that** it comprises oxalic acid as a coformer.

2. Cocrystal according to Claim 1, **characterized in that** it consists of imidacloprid and oxalic acid.

3. Cocrystal according to either of Claims 1 and 2, **characterized in that** the stoichiometric ratio of imidacloprid to oxalic acid is 1:1.

4. Cocrystal according to either of Claims 2 and 3, **characterized in that** it has a triclinic morphology.

5. Cocrystal according to any of the preceding claims, **characterized in that** it has a melting point, measured by means of differential calorimetry (DSC), in the range from 150°C to 160°C.

6. Cocrystal according to any of the preceding claims, **characterized in that** it has, in powder X-ray diffraction analysis (p-XRD), a measurement peak at 2Θ of 26° to 27° which is not possessed by either of the two pure substances imidacloprid and/or oxalic acid.

7. Cocrystal according to any of the preceding claims, **characterized in that** it has, in powder X-ray diffraction analysis (p-XRD), measurement peaks at 2Θ of 18° to 19° and at 2Θ of 27° to 28°.

8. Process for producing a cocrystal comprising imidacloprid, **characterized in that** it comprises at least the steps of
a) mixing imidacloprid with oxalic acid to obtain a mixture A
b) optionally further mixing mixture A with a solvent to obtain a mixture A' and
c) grinding mixture A or mixture A' to obtain the inventive cocrystal.

9. Process for producing a cocrystal comprising imidacloprid, **characterized in that** it comprises at least the steps of
a) providing a saturated solution (A) of imidacloprid and/or a saturated solution (B) of oxalic acid,
b) mixing solutions A and B and/or adding oxalic acid in solid form to solution A and/or adding imidacloprid in solid form to solution B.

10. Use of cocrystals according to any of Claims 1 to 7 for the production of a solution for control of insects.

## Revendications

1. Co-cristal comprenant de l'imidaclopride, **caractérisé en ce qu'**il comprend de l'acide oxalique comme co-générateur.

2. Co-cristal selon la revendication 1, **caractérisé en ce qu'**il consiste en imidaclopride et acide oxalique.

3. Co-cristal selon la revendication 1 ou 2, **caractérisé en ce que** le rapport stoechiométrique d'imidaclopride à acide oxalique vaut 1:1.

4. Co-cristal selon la revendication 2 ou 3, **caractérisé en ce qu'**il présente une morphologie triclinique.

5. Co-cristal selon l'une quelconque des revendications précédentes, **caractérisé en ce qu'**il présente un point de fusion, mesuré par calorimétrie différentielle (DSC), dans la plage de 150 °C à 160 °C.

6. Co-cristal selon l'une quelconque des revendications précédentes, **caractérisé en ce qu'**il présente dans l'analyse par diffraction des rayons X sur poudre (p-XRD) une déviation mesurée à 2 Θ de 26° à 27°, que ne présente aucune des deux substances pures imidaclopride et/ou acide oxalique.

7. Co-cristal selon l'une quelconque des revendications précédentes, **caractérisé en ce qu'**il présente dans l'analyse par diffraction des rayons X sur poudre (p-XRD) des déviations mesurées à 2 Θ de 18° à 19° et à 2 Θ de 27° à 28°.

8. Procédé pour la préparation d'un co-cristal comprenant de l'imidaclopride, **caractérisé en ce qu'**il comprend au moins les étapes
a) mélange d'imidaclopride avec de l'acide oxalique, avec obtention d'un mélange A.
b) éventuellement nouveau mélange du mélange A avec un solvant, avec obtention d'un mélange A' et
c) broyage du mélange A ou du mélange A', avec obtention du co-cristal selon l'invention.

9. Procédé pour la préparation d'un co-cristal comprenant de l'imidaclopride, **caractérisé en ce qu'**il comprend au moins les étapes
a) Disposition d'une solution saturée (A) d'imidaclopride et/ou d'une solution saturée (B) d'acide oxalique.
b) Mélange des solutions A et B et/ou addition d'acide oxalique sous forme de solide à la solution A et/ou addition d'imidaclopride sous forme solide à la solution B.

10. Utilisation de co-cristaux selon l'une quelconque des revendications 1 à 7, pour la préparation d'une solution destinée à la lutte contre les insectes.
